# EUROPEAN PATENT APPLICATION

(11) **EP 3 699 644 A1**
(43) Date of publication of application: **26.08.2020**
(21) Application number: 19158715.3
(22) Date of filing: 22.02.2019
(51) Int. Cl.: G01S 19/48, G01S 5/02, H04W 12/12, H04W 64/00

(54) **USAGE OF DYNAMICALLY CHANGING RADIO ENVIRONMENTS AND RADIO MAPS TO ESTIMATE USER LOCATION**

(71) Applicant: HERE Global B.V., 5611 ZT Eindhoven (NL)
(72) Inventor: VYUNOVA, Tatiana, 33100 Tampere (FI); WIROLA, Lauri Aarne Johannes, 33100 Tampere (FI); LUOMI, Marko, 33100 Tampere (FI); RAUHALA, Petri, 33100 Tampere (FI)
(74) Representative: Cohausz & Florack

(57) **Abstract**

Inter-alia, a method is disclosed comprising: obtaining one or more pieces of first fingerprint information; associating the one or more pieces of first fingerprint information with one or more pieces of timestamp information; and generating or updating a live radio map indicative of a second radio environment covering a second area at least partially covering a first area comprising one or more communication units, wherein the live radio map is generated or updated based at least partially on the one or more pieces of first fingerprint information and the respective one or more pieces of timestamp information. It is further disclosed an according apparatus, computer program and system.

## Description

### FIELD

The following disclosure relates to the field of positioning, or more particularly relates to systems, apparatuses, and methods for utilizing radio maps in dynamically changing radio environments.

### BACKGROUND

Modern global cellular (GSM (Global System for Mobile Communications), CDMA (Code Division Multiple Access), WCDMA (Wideband CDMA), TD-SCMA (Time Division Synchronous Code Division Multiple Access), LTE (Long Term Evolution), LTE-A (LTE-Advanced), NB-IoT (Narrowband-Internet-of-Things), 5G) and non-cellular (primarily WLAN (Wireless Local Area Network), but also BT (Bluetooth), BLE (BT Low Energy), ZigBee, etc.) positioning technologies are (and will be) based on collecting large global databases containing information on the cellular and non-cellular signals. In near future, the positioning technologies based on the motion sensors will be integrated with cellular/non-cellular positioning for higher availability and responsiveness. A large portion of this data typically originates from the users of these positioning technologies.

The data from the users is typically in the form of fingerprints, which contain GNSS (Global Navigation Satellite System)-based or WLAN-based location estimate, and the measurements taken from the radio interfaces (cellular, non-cellular). The measurements may contain
- Global and/or local IDs of the cellular network cells observed and, possibly,
   - signal strength and/or pathloss estimates;
   - timing measurements (timing advance or Round-Trip Time);
- BSSIDs (MAC (Media Access Control address) address of the air interface) of the WLAN access points observed and, possibly,
   - SSIDs;
   - signal strengths (received signal strength index, physical Rx level in dBm ref 1 mW, etc.) and/or pathloss estimates;
   - timing measurements (Round-Trip Time).

The operating systems for the smart devices typically offer open APIs (Application Programming Interface) (e.g. Location Framework, Sensor API, Location API, etc.) to access the radio and location measurements. This means that the application developer does not have a direct access to the low-level hardware interfaces, which usually are chipset vendor proprietary and hence not standardized over the industry. Instead, the radio and location data are provided in the OS-specific format with the built-in access rights specific to the APIs. Unfortunately, the open APIs typically do not have reliable mechanism for the application developer to verify the APIs are securely reading the measurement data from the low-level hardware drivers and/or whether the APIs are not processing/filtering the measurement data in a malicious way.

The measurement data gets uploaded to the server or cloud, where the algorithms are run to generate models of wireless communication nodes for positioning purposes based on the fingerprints received from the multitude of the users. Such models may be coverage areas, node positions, radio propagation models, Rx fields, etc. In the end, these models are transferred back to the user terminals for use in position determination.

Although the end user terminal had GNSS-capability, the end user can still benefit from using cellular/non-cellular/sensor positioning technologies in terms of time-to-first-fix and power consumption. Also, not all applications require highly accurate GNSS-based position (e.g. for local weather application it suffices to use cell-based location estimate). Also, cellular/non-cellular/senor positioning technologies work indoors, which is generally a challenging environment for GNSS-based technologies.

Jamming: deliberate use of radio noise or signals in an attempt to disrupt communications or prevent listening to broadcasts.

Interference: unintentional radio nose, which disrupts communications or prevents listening to broadcasts, e.g. from the near-by radio transmitters.

Spoofing: deliberate attempt to deceive a receiver by broadcasting incorrect signals, structured to resemble a set of normal signals, or by rebroadcasting genuine signals captured elsewhere or at a different time (interception and rebroadcasting signals is sometimes called playback or meaconing). In the context of positioning, these spoofed signals may be modified in such a way as to cause the receiver to estimate its position to be somewhere other than where it actually is, or to be located where it is but at a different time.

Spoofing and jamming GNSS signals may for instance matter since they are used for positioning purposes, which is a growing trend. While such technologies have long been available for military purposes, these techniques have now become available also for individual/private users.

In the civilian domain, the purpose of such jamming or spoofing is typically to gain financial advantage.

In the context GNSS, various techniques are being introduced to mitigate the problem. As an example, Galileo signals have in-built mechanisms for signal authentication. Initiatives to provide authentication capabilities to all the GNSSs and their signals are being setup.

Jamming and spoofing threats are valid also for cellular and WiFi-based positioning. These network-based positioning methods are increasingly being used to complement, or even replace, GNSS in smart devices. Some of the GNSS anti-spoofing techniques rely on cross-checking GNSS and network-based location. Finally, in some low-power, low-cost IoT devices network-based positioning is used as the sole positioning technique. Therefore, it is clearly that malicious actors will be targeting network-based positioning methods in the near future.

### SUMMARY OF SOME EXEMPLARY EMBODIMENTS

However, it is easy to fake WiFi, BT, and cellular signals with cheap radio transmitters. Further, with those devices, WiFi access point signals can be faked to some extent e.g. by making them look like an access point (or multiple access points) that in reality is (are) located somewhere else.

It is thus, inter alia, an object of the invention to provide a trust index respectively trustworthiness information e.g. for location-based services being indicative about a reliability and/or about information of dynamically changing radio environments.

According to a first exemplary aspect of the present invention, a method is disclosed, the method comprising:
- obtaining one or more pieces of first fingerprint information, wherein a respective piece of first fingerprint information is indicative of at least one first location estimate within a first radio environment covering a first area, wherein one or more signals of one or more communication units are observable at the estimated location;
- associating the one or more pieces of first fingerprint information with one or more pieces of timestamp information, wherein a respective timestamp information of the one or more pieces of timestamp information is indicative of a time and/or date at which a respective piece of first fingerprint information of the one or more pieces of first fingerprint information was obtained; and
- generating or updating a live radio map indicative of a second radio environment covering a second area at least partially covering the first area comprising one or more communication units, wherein the live radio map is generated or updated based at least partially on the one or more pieces of first fingerprint information and the respective one or more pieces of timestamp information.

This method may for instance be performed and/or controlled by an apparatus, for instance a server or a base station (of a cellular communication system) or a radio node (of a non-cellular communication system (e.g. a radio-based positioning system)) or a communication unit. Alternatively, this method may be performed and/or controlled by more than one apparatus, for instance a server cloud comprising at least two servers. For instance, the method may be performed and/or controlled by using at least one processor of the apparatus.

According to a further exemplary aspect of the invention, a computer program is disclosed, the computer program when executed by a processor causing an apparatus, for instance a server, to perform and/or control the actions respectively steps of the method according to the first exemplary aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

According to a further exemplary aspect of the invention, an apparatus is disclosed, configured to perform and/or control or comprising respective means for performing and/or controlling the method according to the first exemplary aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

According to a further exemplary aspect of the invention, an apparatus is disclosed, comprising at least one processor and at least one memory including computer program code, the at least one memory and the computer program code configured to, with the at least one processor, cause an apparatus, for instance the apparatus, at least to perform and/or to control the method according to the first exemplary aspect.

The above-disclosed apparatus according to any aspect of the invention may be a module or a component for a device, for example a chip. Alternatively, the disclosed apparatus according to any aspect of the invention may be a device, for instance a server or server cloud. The disclosed apparatus according to any aspect of the invention may comprise only the disclosed units, for instance means, processor, memory, or may further comprise one or more additional units.

According to a second exemplary aspect of the present invention, a method is disclosed, the method comprising:
- receiving a live radio map indicative of a second radio environment covering a second area at least partially covering the first area comprising one or more communication units.

This method may for instance be performed and/or controlled by an apparatus, for instance a by an electronic device, e.g. a mobile terminal. For instance, the method may be performed and/or controlled by using at least one processor of the electronic device, or by using at least one chip, component or module of the electronic device.

According to a further exemplary aspect of the invention, a computer program is disclosed, the computer program when executed by a processor causing an apparatus, for instance an electronic device, to perform and/or control the actions of the method according to the second exemplary aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

According to a further exemplary aspect of the invention, an apparatus is disclosed, configured to perform and/or control or comprising respective means for performing and/or controlling the method according to the second exemplary aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

According to a further exemplary aspect of the invention, an apparatus is disclosed, comprising at least one processor and at least one memory including computer program code, the at least one memory and the computer program code configured to, with the at least one processor, cause an apparatus, for instance the apparatus, at least to perform and/or to control the method according to the second exemplary aspect.

The above-disclosed apparatus according to any aspect of the invention may be a module or a component for a device, for example a chip. Alternatively, the disclosed apparatus according to any aspect of the invention may be a device, for instance a server or server cloud. The disclosed apparatus according to any aspect of the invention may comprise only the disclosed components, for instance means, processor, memory, or may further comprise one or more additional components.

According to a third exemplary aspect of the invention, a system is disclosed, comprising:
at least one apparatus according to the first exemplary aspect of the present invention as disclosed above, configured to perform and/or control the method of the first exemplary aspect as disclosed above; and
at least one electronic device according to the second exemplary aspect of the present invention as disclosed above, configured to perform and/or control the method of the second exemplary aspect as disclosed above.

The at least one apparatus and the at least one electronic device may for instance be configured to perform and/or control the method(s) according to the first and/or second exemplary aspect of the present invention at least partially jointly.

In the following, exemplary features and exemplary embodiments of all aspects of the present invention will be described in further detail.

The at least one apparatus configured to perform and/or control the method of the first exemplary aspect of the present invention may for instance comprise or be connectable to a transceiver (e.g. transmitter and receiver), e.g. according to WLAN, to BT or to BLE communication standard, to name but a few non-limiting examples.

The one or more communication units may for instance advertise availability respectively their presence to one or more electronic devices (e.g. mobile devices).

The advertising may for instance be realized by sending one or more signals. In some cases, they may for instance advertise availability, e.g. to one or more electronic devices seeking a connection, e.g. via broadcasting one or more (e.g. radio) signals. Such signals may for instance convey information in the form of packets of pre-defined format. The information may for instance be indicative of at least an identifier of the respective communication unit. The at least one identifier of the respective communication unit may for instance enable an electronic device to identify the respective communication unit, e.g. so that the location of the communication unit may be determinable based at least partially on the at least one identifier of the respective communication unit. The one or more communication units may for instance be visible to any electronic device with suitable radio interface, regardless of whether or not they are known to the respective electronic device.

Such one or more communication units may for instance be used for positioning (e.g. indoor and/or outdoor) purposes, and/or floor detection, e.g. according to BT-, BLE- and/or WLAN-specification. Such a respective communication unit of the one or more communication units may for instance be WiFi Access Points, tag-devices, and/or beacon devices, to name but a few non-limiting examples.

Further, such one or more communication units may for instance be comprised by a cellular communication network. Thus, such one or more communication units may for instance be one or more base stations of a cellular communication network.

For instance, some of the one or more communication units may for instance be configured according to wireless communication specification (e.g. WiFi, BT, BLE, and/or ZigBee, to name but a few non-limiting examples), and/or some other communication units of the one or more communication units may for instance be configured according to cellular communication standard (e.g. Global System for Mobile Communications (GSM), General Packet Radio Service (GPRS), Longterm Evolution (LTE), and/or 5G (Fifth Generation, also referred to as "Next Generation Mobile Networks"), to name but a few non-limiting examples). For instance, the one or more pieces of (first and/or second) fingerprint information may for instance comprise or represent one or more communication units that are configured according to WiFi, BT, BLE, and/or ZigBee communication standard. Alternatively, or additionally, one or more (further) communication units may for instance be configured according to GSM, GPRS, UMTS, LTE, and/or 5G cellular communication standard. Alternatively or additionally, the one or more (further) communication may for instance be configured according to WCDMA (Wideband CDMA (Code Division Multiple Access)), and/or LPWAN (Low Power Wide Area Network) communication standard.

The one or more pieces of first fingerprint information may for instance comprise or represent a location estimate, e.g. a location estimate that was determined based on one or more GNSS signals, e.g. GPS signals. Thus, such a location estimate may for instance be referred to as GNSS-based location estimate. Such a location estimate may for instance be determined based on one or more GNSS signals that are receivable by a GNSS-sensor, e.g. comprised or connectable to an electronic device (e.g. the at least one electronic device performing and/or controlling the method according to the second exemplary aspect of the present invention).

The one or more pieces of first fingerprint information may for instance be obtained by receiving the one or more pieces of first fingerprint information, e.g. from one or more electronic device (e.g. performing and/or controlling the method according to the second exemplary aspect of the present invention), and/or from an entity that is different from the at least one apparatus. Such a different entity may for instance be a server comprising or being connectable to a memory in that the one or more pieces of first fingerprint information are at least temporarily stored prior to the obtaining.

For instance, in case the one or more pieces of first fingerprint information stem from one or more electronic device, the one or more pieces of first fingerprint information may for instance be gathered by the one or more electronic device. The one or more pieces of first fingerprint information may for instance be stored in a respective memory of each of the one or more electronic devices. Then, the one or more pieces of first fingerprint information may for instance be transmitted to the at least one apparatus so that the at least one apparatus performing and/or controlling the method according to the first exemplary aspect of the present invention obtains the one or more pieces of fingerprint information.

A respective timestamp information may for instance be indicative of the time and/or date at which the respective first fingerprint information was gathered. It will be understood that a respective first fingerprint information that is associated with a respective timestamp information may for instance to be gathered prior to associating the respective first fingerprint information with the respective timestamp information. Thus, a time and/or date represented by a respective timestamp information refers to the time and/or date prior to the obtaining of the respective first fingerprint information. In this case, e.g. a respective timestamp information is obtained (e.g. received) together with a respective first fingerprint information of the one or more pieces of first fingerprint information. In case a respective timestamp information is not obtained, alternatively, the time and/or date represented by a respective timestamp information may for instance be set by the at least one apparatus upon the obtaining of the respective first fingerprint information.

For instance, the one or more pieces of first fingerprint information may be gathered by one or more electronic devices, e.g. via crowd-sourcing. Those gathered one or more pieces of first fingerprint information may for instance be stored in a memory upon obtaining them. Those stored one or more pieces of first fingerprint information may for instance be sorted or accumulated based on the time and/or date and/or location at which the respective pieces of first fingerprint information were (e.g. initially) gathered or obtained.

Such a live radio map may be understood to represent an area (e.g. the second area) of a pre-determined environment within which the one or more communication units are expected to support e.g. electronic device to get their positions estimated.

Additionally or alternatively, the live radio map may be defined by an environment and/or an area (e.g. the second area) within which the one or more communication units are capable to support e.g. electronic devices to estimate their positions. Such a live radio map may for instance comprise or represent one or more pieces of trustworthiness information. Further, such a live radio map may for instance comprise or represent location information (e.g. x-, y-coordinates, or latitude-, longitude coordinates, and optionally z-coordinate, respectively altitude). Further, in case the live radio map does not comprise or represent one or more pieces of trustworthiness information, the respective live radio map may for instance be utilized to derive at a respective trustworthiness information, e.g. as follows: such one or more pieces of trustworthiness information may for instance be determined at least partially based on a (e.g. obtained second) fingerprint information and a respective live radio map (e.g. not comprising or representing one or more pieces of trustworthiness information). Thus, a respective trustworthiness information is determined (e.g. deriving of the respective trustworthiness information) based on such a (second) fingerprint information and the respective live radio map, e.g. by combining them to derive at a respective trustworthiness information (e.g. comprising or representing a trust index). A respective determining of trustworthiness information is disclosed in more detail below in this description.

The (e.g. expected) radio coverage associated with the one or more communication units may describe (e.g. define) the specific area within which a radio signal (e.g. the one or more signals sent by the one or more communication units) transmitted or triggered to be transmitted by the one or more communication units is (e.g. expected to be) observable (e.g. receivable with a minimum quality).

For instance, the live radio map may comprise or represent a respective radio coverage model for each communication unit of the one or more communication units. Therein, a radio coverage model for a respective communication unit may for instance be understood to represent the expected radio coverage associated with this communication unit.

Based on the live radio map, it may for instance be determined, whether certain identifier information of the one or more communication units are expected to be observable. For instance, the live radio map may comprise information indicative of any position within the coverage area covered by the live radio map at which (e.g. different) signals or a number of different signals that stem from different communication units are expected to be observable. Such information may for instance be gathered (e.g. as a respective first fingerprint information), and then a corresponding live radio map comprising the gathered information may be generated.

The live radio map may for instance be provided for use by one or more electronic devices to estimate their positions as location estimates at least partially based on this live radio map. A live radio map may represent an estimate of a two-dimensional or a three-dimensional coverage map. It may describe (e.g. define) the expected radio coverage of a respective communication unit of the one or more communication units within which a signal transmitted or triggered to be transmitted by the communication unit (e.g. installed at an installation position) is expected to be observable. The real radio coverage of the communication unit may however deviate from such an expected radio coverage.

A radio coverage model may be a hard-boundary or a soft-boundary model (e.g. a hard-boundary model or a soft-boundary model describing an expected (e.g. radio) coverage).

An example for a soft-boundary radio coverage model may be a parametric radio model. Data of such a parametric radio model may be considered to be data which enable determination of one or more characteristics of one or more signals transmitted or triggered to be transmitted by a respective communication unit of the one or more communication units that are expected to be observable at different positions. For example, data of such a parametric radio model may represent radio transmission parameters of the parametric radio model. Using radio transmission parameters of the parametric radio model may have the effect that the required amount of data for defining the one or more characteristics of one or more signals may be particularly small. An example of a parametric radio model is a pathloss model for radio signals (e.g. the one or more signals) transmitted or triggered to be transmitted by a respective communication unit of the one or more communication units. In this case, e.g. the radio transmission parameters may comprise a pathloss exponent and an indication of a transmission power used by the transmitter of the respective communication unit of the one or more communication units. Based on data of a parametric radio model, an expected radio coverage of a respective communication unit of the one or more communication units installed at a (potential) installation position may be determined.

An example for a hard-boundary radio coverage model for a respective radio node may be a geometric model. Information of such a geometric radio model may be considered to be information which (e.g. geometrically) describe (e.g. define) an expected radio coverage of the respective radio node.

Another example may for instance be based on a radio image-based approach, wherein a grid of one or more signals (e.g. received signal strength values) that are receivable at a certain location are comprised or represented by the respective radio map.

Further, e.g. radio transmission parameters of a parametric radio model of a respective communication device of the one or more communication units may be determined (e.g. derived or selected or calculated) at least partially based on one or more observation reports e.g. represented by a corresponding second fingerprint information. For example, the radio transmission parameters of a parametric radio model of a radio positioning support device may at least partially correspond to and/or determined based on one or more radio transmission parameters associated with this communication unit of the one or more communication units, wherein the one or more radio transmission parameters associated with this communication unit of the one or more communication units may for example be represented by and/or contained in the one or more observation reports (e.g. one or more observation reports associated with a beacon device and/or a (e.g. adjacent) communication unit of the one or more communication units).

In case different values are determined for a radio transmission parameter based on one or more radio transmission parameters represented by and/or comprised by the one or more observation reports, a mean value (e.g. an arithmetic mean value or a median mean value) may for example be used as value for this radio transmission parameter. Alternatively, one value of the different values may be selected according to a pre-determined rule to be used for as value for this radio transmission parameter (e.g. the lowest or highest value may be used as value for this radio transmission parameter).

For making use of a positioning service, an electronic device (e.g. a smartphone, tablet, wearable, IoT device, to name but a few non-limiting examples, performing and/or controlling the method according to the second exemplary aspect of the present invention) may detect signals broadcast by a plurality of communication units and measure their signal strengths. The electronic device may transmit (e.g. broadcast) the results of the measurements along with identifier information of the communication units, e.g. as a respective second fingerprint information to the at least one apparatus of the method according to the first exemplary aspect of the present invention, e.g. a live radio map and positioning server. An identifier of a respective communication unit may be for instance in the form of a basic service set identifier (BSSID), a universally unique identifier (UUID) (e.g. according to Eddystone- or iBeacon-specification in case the respective communication unit is a beacon device), and/or a MAC (Medium Access Control) address, and the results of measurements may be e.g. in the form of a received signal strength indicator (RSSI). The live radio map and positioning server may evaluate the signals taking account of data stored in live radio maps and returns a location estimate (e.g. in the form of coordinates) that is consistent with the measured signal strengths of the plurality of communication units.

The live radio map may for instance comprise or represent one or more pieces of information that are respectively indicative of one or more information data points that are gathered in various locations of the first area. For instance, the one or more pieces of first fingerprint information may be indicative of or represent information about (different) radio signal(s), e.g. depending on the location within the first area, and/or the time at which the respective radio environment information of the one or more pieces of first fingerprint information was (initially) gathered. Since the live radio map is generated or updated based at least partially on the one or more pieces of first fingerprint information, the aforementioned information data points may for instance be comprised by the live radio map as well. For instance, based on a location estimate comprised or represented by a respective piece of first fingerprint information the live radio map can be updated, since the respective piece of first fingerprint information represents which signals of the one or more communication units are observable at the position as represented by the location estimate. Thus, the live radio map may for instance be indicative of a state of the first radio environment. The state may for instance represent one or more parameters of the one or more communication units, e.g. which one or more signals may for instance be observable and/or receivable at a certain location within the first area. Such a respective parameter of the one or more parameters may for instance be whether or not one or more signals are observable and/or receivable at the certain location (e.g. due to (electromagnetic) shielding of the one or more signals, or the respective communication unit of the one or more communication units not outputting a respective signal at (a) certain time(s) and/or date(s), to name but a few non-limiting examples).

The second (e.g. geographic) area represented by the live radio map may for instance be of a limited size. The second area of the live radio map at least partially covers the first area. The second area may for instance comprise one or more venues. Such a respective venue may for instance be a building, shopping mall, office complex, public accessible location (e.g. station, airport, university, library, or the like), to name but a few non-limiting examples. The second area may for instance be located, at least partially, inside such a venue. In this case, at least a part of the second area may for instance be a floor plan respectively map of the respective venue. In case the venue comprises more than one floor, the geographic area may for instance comprise one or more of the floors of the venue. In case the second area comprises, at least partially, an outside area, in which e.g. one or more venues may be located, the geographic area may for instance be represented by a map. It will be understood that it may be possible to determine (e.g. generate) a global and/or partial radio map based at least partially on the one or more pieces of fingerprint information. More details are given later on in this specification.

In case a live radio map is not present at the at least one apparatus, e.g. the method according to the first exemplary aspect is performed and/or controlled for the first time, the live radio map is generated. The live radio map is generated or updated based at least partially on the one or more pieces of first fingerprint information and the respective one or more pieces of timestamp information. The generated live radio map is then stored, e.g. in a memory comprised by or connectable to the at least one apparatus, e.g. for further usage (e.g. providing the live radio map or at least a part of it to another device, e.g. an electronic device or a plurality of electronic devices, to name but a few non-limiting examples). In case a live radio map is present at the least one apparatus, this live radio map can be updated at least partially based on the one or more pieces of first fingerprint information, since these one or more pieces of first fingerprint information may for instance comprise more up-to-date information on the represented radio environment, or a part of it, than the information that is comprised in the (present) live radio map. In this way, an up-to-date and/or accurate live radio map can be achieved.

It will be understood that the one or more pieces of first fingerprint information are used for generating or updating the live radio map, since at least a part of a respective piece of first fingerprint information comprised or represents a location estimate indicative of a certain location at which the respective piece of first fingerprint information was gathered.

In contrast, a respective second fingerprint information is used for determining a location estimate based on this respective second fingerprint information. Thus, a respective second fingerprint information does not comprise or represent a location estimate, but at least one or more identifiers of one or more respective communication units, which signals are observable at the specific location at which the respective second fingerprint information was gathered. Thus, a respective second fingerprint information is used or utilized in a positioning.

According to an exemplary embodiment of the first exemplary aspect of the present invention, the method further comprises:
- receiving a positioning request to get a second location estimate indicative of a current position of an electronic device from which the positioning request stems determined; and
- determining the second location estimate at least partially based on the live radio map.

The second location estimate may be understood as a location estimate that represents a determined location of the electronic device, wherein the second location estimate is determined at least partially based on a respective second fingerprint information. In contrast, the first location estimate that a respective piece of first fingerprint information already comprises, may for instance be utilized in generating or updating the live radio map. Further, such a (first and/or second) location estimate may for instance comprise or represent not only location information (e.g. latitude-, longitude coordinates, and optionally altitude), but also e.g. one or more pieces of trustworthiness information (e.g. information indicative of how reliable information comprised by the live radio map respectively such a live radio map is).

According to an exemplary embodiment of the first exemplary aspect of the present invention, the method further comprises:
- obtaining a second fingerprint information gathered by an electronic device,
   wherein the second fingerprint information is indicative of one or more communication units comprised by a radio environment covering an area,
   wherein one or more signals of the one or more communication units are observable at the location at which the second fingerprint information was gathered,
   wherein the second location estimate is determined further based on the second fingerprint information.

The second fingerprint information may for instance be gathered by an electronic device, e.g. a mobile terminal. Such a respective electronic device may for instance an electronic device performing and/or controlling the method according to the second exemplary aspect of the present invention. The second fingerprint information may for instance be gathered at any location at which the respective electronic device is located. Then, the gathered second fingerprint information may for instance be output by the respective electronic device, and then be obtained in this exemplary embodiment of the first exemplary aspect of the present invention. The second fingerprint information may for instance comprise one or more information/data of static and/or mobile radio signals, to name but one non-limiting examples. The second fingerprint information may for instance comprise one or more communication units of the second area of the second radio environment of the live radio map, but this may not necessarily be required.

Based at least partially on the one or more signals output by the one or more communication units (e.g. WiFi access points), such a second location estimate may for instance be determined. Such a second location estimate may for instance be indicative of an estimation of a current position at which the one or more signals of the one or more communication units are observable and/or receivable. Such a second location estimate may for instance be determined by the at least one apparatus based at least partially on an obtained second fingerprint information. In particular, such a location estimate may for instance be determined based at least partially on one respective second fingerprint information since e.g. the respective second fingerprint information is obtained (e.g. received) from a certain electronic device. Thus, the location estimate is determined by an entity - e.g. the at least one apparatus - that is different from the entity - the certain electronic device - that gathered the respective second fingerprint information. Alternatively, another entity that is different from the at least one apparatus may for instance determine the location estimate. In this latter case, the location estimate may for instance be obtained by the at least one apparatus subsequent to the determining of the location estimate, e.g. by receiving the location estimate.

The live radio map may for instance be utilized to determine the second location estimate indicative of a certain location at which the respective obtained second fingerprint information was gathered by the electronic device from which this respective second fingerprint information stems. The live radio map may for instance be utilized in case the radio environment of the obtained second fingerprint information at least partially overlaps with the second radio environment of the live radio map.

According to an exemplary embodiment of the first exemplary aspect of the present invention, the method further comprises:
- outputting the live radio map.

The live radio map may for instance be output to an electronic device. For instance, in case a positioning request is obtained respectively received prior to the outputting of the live radio map, the live radio map may for instance be output to the electronic device from which the positioning request stems respectively was obtained (e.g. received).

The live radio map may for instance be output, e.g. to one or more further apparatuses (e.g. an electronic device, a server, and/or a communication unit, or the like, to name but a few non-limiting examples), or to another apparatus that transfers (e.g. relays) the live radio map to the one or more apparatuses.

According to an exemplary embodiment of the first exemplary aspect of the present invention, the method further comprises:
- determining a trustworthiness information indicative of a degree of similarity between the radio environment represented by the o(obtained) second fingerprint information and the second radio environment represented by the live radio map, wherein the trustworthiness information is determined based at least partially on a comparison of the second fingerprint information with the live radio map.

Such a trustworthiness information may for instance be determined based on a comparison of the radio environment of the (obtained) second fingerprint information and the second radio environment of the live radio map. For instance, it may be determined information/data that matches between the information/data comprised by the second fingerprint information and the respective information/data comprised by the live radio map, such as identifiers of communication units, number of communication units, received signal strength values of communication units, to name but a few non-limiting examples.

Such a trustworthiness information may for instance be utilized in order to determine how reliable the live radio map respectively the information comprised by the live radio map is. For instance, in case the trustworthiness information indicates that the live radio map seems to be outdated, the live radio map may for instance be updated based at least partially on one or more pieces of "new" first fingerprint information. Such one or more pieces of "new" first fingerprint information may for instance be the most actual obtained one or more pieces of first fingerprint information

According to an exemplary embodiment of all aspects of the present invention, a degree of similarity is determined further based on one or more differences and/or similarities between the first radio environment and the second radio environment.

Besides of using radio environment similarities, differences for determining (e.g. calculating) the trustworthiness information may also be used. Further, it may for instance be possible to additionally or alternatively use other indicators or sensors, such as magnetic field readings or barometer readings that are further utilized for determining (e.g. calculating) the trustworthiness information.

According to an exemplary embodiment of all aspects of the present invention, the degree of similarity is determined to represent a higher degree of similarity in case the number of access points that are used for the comparison grows.

The degree of similarity may for instance be dependent upon the total number of communication units that may for instance be represented by the one or more pieces of first fingerprint information that are obtained and the respective information comprised or represented by the live radio map prior to updating the live radio map based at least partially on the one or more pieces of first fingerprint information that are obtained. For instance, if the number of communication units comprised by or being represented by the one or more pieces of first fingerprint information (first radio environment) and comprised or represented by the live radio map (second radio environment) may for instance be compared to each other. Based on this comparison, e.g. the degree of similarity can be determined to be relatively low due or relatively high. For instance, in a scenario in which the highest number of similar communication units comprised by or being represented by the one or more pieces of first fingerprint information (first radio environment) and the live radio map (second radio environment) is greater (e.g. total number of e.g. communication units (e.g. wireless access points) is greater than e.g. 5, to name but one non-limiting example), the degree of similarity may be relatively higher in case the highest number is greater than in the first case, to name but one non-limiting example.

According to an exemplary embodiment of all aspects of the present invention, the live radio map comprises one or more pieces of information on the one or more communication units.

The one or more pieces of information on the one or more communication units may for instance be represented by one or more information data points related to the respective radio environments.

The live radio map may for instance represent information data points about the communication units. Those information data points may for instance be gathered in various locations, tagged with location information, timestamped, and/or stored in a memory (e.g. storage), for instance in a database. Those information data points may for instance be comprised by the one or more pieces of first fingerprint information. Additionally or alternatively, the information data points may for instance be gathered in conjunction with the gathering of the respective second fingerprint information, e.g. performed and/or controlled by the method according to the second exemplary aspect of the present invention. It will be understood that a respective second fingerprint information may for instance be used to generate or update the live radio map.

The one or more information data points may for instance represent prior knowledge of one or more radio environment circumstances, e.g. of one or more communication units at different locations, and additionally or alternatively, at different times during operation of the one or more communication units. The live radio map may for instance comprise such information data points about different radio technology signals, e.g. depending on the area and/or the time at which the respective piece of first and/or second fingerprint information was (initially) obtained/gathered prior to enclosing such information data points in the live radio map by a corresponding generating or updating of the live radio map. Said radio technology may for instance be or comprise one or more WiFi network signals, cellular networks signals (e.g. GSM, Code Division Multiple Access (CDMA), WCDMA, LTE, Time Division (TD)-Synchronous CDMA (SCDMA), 5G, LTE Cat M1, Narrow Band (NB)-IoT, Long Range (LoRa), LPWAN, and/or SigFox signals, or other cellular signals), BT or BLE or ZigBee signals, or other radio technology signals.

According to an exemplary embodiment of all aspects of the present invention, the one or more communication units are represented by one or more ad-hoc and/or wireless access points and/or Bluetooth beacons and/or Bluetooth Low Energy beacons.

Such an ad-hoc access point may for instance enable a centralized interface between a plurality of devices, e.g. electronic devices so that those plurality of electronic devices are enabled to communicate with each other via the ad-hoc access point.

Such a wireless access point may for instance be configured according to a wireless communication standard, such as e.g. BT or BLE or ZigBee signals, WLAN, or other radio technology communication standard to name but a few non-limiting examples.

According to an exemplary embodiment of all aspects of the present invention, the one or more pieces of first and/or second fingerprint information are further indicative of one or more of the following communication networks i) to ii):
i) at least one cellular communication network; and
ii) at least one non-cellular communication network.

The at least one non-cellular communication network may for instance be WiFi, BT, BLE, ZigBee specification, to name but a few non-limiting examples.

The at least one cellular communication network may for instance be according to GSM, UMTS, LTE, 5G communication standard, to name but a few non-limiting examples.

The at least one non-cellular communication network, and/or the at least one cellular communication network may separately or at least partially together comprise the one or more communication units as represented by the first and/or second radio environment, or the radio environment represented by the second fingerprint information.

For instance, the location estimate may be determined (e.g. calculated) based at least partially on the first radio environment, e.g. based on certain WiFi access point signals or cellular network signals that are observable at the certain position for which the location estimate is determined.

Alternatively or additionally, a satellite (e.g. GNSS) based location estimate may for instance be determined as a temporary location estimate. For instance, such a GNSS based location estimate may for instance be used as a reference location that can be refined by the live radio map to determine a more accurate second location estimate.

According to an exemplary embodiment of all aspects of the present invention, the one or more pieces of first fingerprint information representing the first radio environment, and/or the second fingerprint information representing a respective radio environment, cover at least a part of the same area that is represented by or comprised by the live radio map.

Thus, the one or more pieces of first fingerprint information were gathered prior to their obtaining at certain locations that are within the same (e.g. geographic) area that is represented or covered by the live radio map. The one or more pieces of first fingerprint information are gathered based on one or more signals of communication units that are observable within this area. Thus, the one or more pieces of first fingerprint information cover at least a part of the same area that is represented by or comprised by the live radio map. It will be understood that the respective radio environment, based on which signals the obtained second fingerprint information was gathered by a respective electronic device, can cover at least a part of the same area that is represented by or comprised by the live radio map as well.

According to an exemplary embodiment of all aspects of the present invention, the second area represented by the live radio map is divided into one or more smaller areas, wherein each of those one or more smaller areas represent a respective partial live radio map covering a smaller area than the live radio map.

The live radio map comprising the one or more smaller areas may for instance be referred to as global live radio map. The respective live radio maps representing the one or more smaller areas may for instance themselves represent live radio maps. Those latter live radio maps may for instance be referred to as partial live radio maps. Such a partial live radio map may for instance represent an independent live radio map that can be utilized in the same way than the previously mentioned "live radio map". In the following, the term "live radio map" is used to cover both possibilities of a "global live radio map" and/or a "partial live radio map".

According to an exemplary embodiment of all aspects of the present invention, the method further comprises:
- outputting the one or more live radio maps (e.g. to an/the electronic device).

As disclosed above, the live radio map may for instance be a global and/or partial live radio map, wherein the latter may for instance be understood to represent an area of a pre-determined (radio) environment, which is a part of the global live radio map, within which the one or more communication units are expected to support e.g. one or more electronic devices to get their respective locations to be determined (e.g. estimated). For instance, the respective live radio map may contain or represent a respective radio coverage model for each of the one or more communication units. Therein, a radio coverage model for a respective communication unit may for instance be understood to represent the expected radio coverage associated with the respective communication unit. Based on the respective live radio map, it may for instance be determined, whether a certain identifier associated with a respective communication unit are expected to be observable. For instance, the live radio map may comprise information indicative of any position within the coverage area covered by the live radio map at which (e.g. different) signals output by the one or more communication units or a number of different of such signals are expected to be observable. Such information enabling a live radio map to be determined or updated may for instance be gathered, e.g. via crowdsourcing, and then a corresponding live radio map can be generated or updated. It will be understood that such a live radio map may for instance comprise additional information, e.g. such as RSSI values at various locations within coverage areas enabling a more accurate determining (e.g. estimating) of a position of a respective electronic device.

According to an exemplary embodiment of the first exemplary aspect of the present invention, the method further comprises:
- determining whether or not the live radio map is outdated based on a comparison of a respective timestamp information with a pre-determined or determined according to pre-defined rules time-to-live-information indicative of a timespan assuming no significant changes have occurred to a respective radio environment (e.g. the second radio environment represented by the live radio map) as comprised or represented by the live radio map; and
- cleaning respective information comprised or represented by the live radio map that are outdated in case the live radio map is outdated.

In order to determine whether or not the live radio map is outdated, the respective timestamp information may for instance be utilized. For instance, it may for instance be determined whether or not a certain timespan since a last update of the live radio map has elapsed or not. In case the certain timespan has elapsed, it may for instance be determined that the live radio map is outdated. Then, the outdated live radio map may for instance be updated based at least partially on the one or more pieces of fingerprint information. Further, it will be understood that only some parts or information comprised by or represented by the live radio map may for instance be outdated, e.g. some of information data points comprised by the live radio map. Then, only those outdated information data points may for instance be updated based at least partially on the one or more pieces of fingerprint information. In case the obtained one or more pieces of fingerprint information do not comprise or represent information data points that are needed to update the outdated information data points, the outdated information data points comprised or represented by the live radio map may for instance be deleted out of the live radio map. Then, in case one or more further pieces of fingerprint information are obtained during a later stage may for instance be utilized to update those outdated information data points, or to add those information data points again.

The updating of the live radio map may for instance be a continuous process. For instance, the updating of the live radio map may for instance not comprise to consider or to require a checking of whether the information/data comprised or represented by the live radio map is outdated or not. Such information/data may for instance be updated regardless. Of course, when updating the live radio map, it may for instance be advantageous to remove outdated information/data.

Information on whether the respective information/data comprised or represented by the live radio map is up-to-date or outdated may for instance be necessary for using the information/data, e.g. in a positioning. Such outdated information/data comprised or represented by the live radio shall not be used and may be cleaned out from the database.

According to an exemplary embodiment of all aspects of the present invention, the live radio map, or one or more partial live radio maps comprises one or more (e.g. several) records corresponding to the one or more respective communication units, wherein each of the one or more records is associated with a respective timestamp information.

It will be understood that in case the live radio map comprises one or more partial live radio maps, each of those one or more records can be associated with its own piece of timestamp information. In particular, the live radio map may not be associated with just one (global) timestamp information. In this way, it may for instance be determined whether or not a certain record of a respective (e.g. partial) live radio map respectively information data points comprised or represented by the respective (e.g. partial) live radio map is outdated, in the same way as described above in conjunction with the live radio map.

The method of the second exemplary aspect of the present invention may for instance be performed by at least one electronic device.

According to an exemplary embodiment of the second exemplary aspect of the present invention, the method further comprises:
- gathering a second fingerprint information indicative of one or more communication units comprised by a radio environment covering an area, wherein one or more signals of the one or more communication units are observable at a location; and
- outputting the second fingerprint information.

The gathering of the second fingerprint information of the method of the second exemplary aspect of the present invention may for instance be as follow:
Such a second fingerprint information is indicative of one or more communication units comprised by a certain radio environment covering an (e.g. geographic) area,
wherein one or more signals of the one or more communication units are observable at a location.

A plurality of observable (e.g. radio) signals at a certain location, e.g. by an apparatus (e.g. the at least one electronic device performing and/or controlling the method according to the second exemplary aspect of the present invention) may for instance be gathered (e.g. measured or recorded), e.g. by one or more sensors and/or radio interfaces comprised by or connectable to the at least one electronic device. The observable (e.g. radio) signals may for instance be gathered (e.g. measured) by capturing an identifier of a respective communication unit that sent the respective observable signal. The resulting information may for instance be formed into a second fingerprint information. The observable signals may for instance comprise one or more pieces of information enabling a location at which the one or more signals are observable and/or receivable to be determined. For instance, the one or more signals may for instance comprise a (e.g. position) information indicative of a (current) location of the entity that has output the respective signal. Such information may for instance be captured and formed into a respective second fingerprint information so that the respective second fingerprint information may for instance comprise or represent the location of the entity (e.g. a communication unit of the one or more communication units) that has output the respective signal. Additionally or alternatively, the one or more signals may for instance comprise the at least one identifier enabling a (current) location of the entity to be determined. Additionally or alternatively, the respective second fingerprint information may for instance comprise or represent information originating from one or more GNSS-based signals enabling a (current) location of the entity to be determined.

A respective second fingerprint information may for instance further comprise one or more signal strength values. One or more signal strength values may for instance be determined by measuring one or more signals sent by the one or more communication units. A respective signal strength value may for instance be represented by a received signal strength value (RSS). Such a received signal strength value may for instance represent the power of a received radio positioning support signal (e.g. sent by a respective communication unit of the one or more communication units). Such a radio positioning support signal may for instance be sent (e.g. periodically) from a respective communication unit of the one or more communication units. Alternatively or additionally, the respective second fingerprint information may for instance comprise just the RSS of a (communication) signal and/or of an identity message broadcast by a respective communication unit (e.g. a respective radio node) of the one or more communication units. An example of a received signal strength parameter is a received signal strength indicator (RSSI) or a representation of a physical receiving power level (e.g. a Rx power level value), e.g. in dBm. A signal strength value may for instance represent a signal strength measurement of the observable signal strength at the certain location, at which the gathering (e.g. measuring) is performed and/or controlled.

The electronic device may for instance be portable (e.g. weigh less than 5, 4, 3, 2, or 1 kg). The electronic device may for instance comprise or be connectable to a display for displaying information, e.g. a route that is guided/navigated to a user, to name but one non-limiting example. The electronic device may for instance comprise or be connectable to means for outputting sound, e.g. in the form of spoken commands or information. The electronic device may for instance comprise or be connectable to one or more sensors for determining the devices position, such as for instance a GNSS receiver, in the form of a GPS receiver. The electronic device may for instance comprise to be connectable to one or more sensors, e.g. in the form of an accelerometer and/or a gyroscope for gathering (e.g. measuring) further information. The electronic device may for instance comprise or be connectable to a receiver and/or a transmitter (e.g. a transceiver) for receiving and/or sending information. For instance, the electronic device may comprise one or more radio receivers (e.g. radio transceivers) to gather one or more pieces of second fingerprint information, which may for instance enable the devices position to be determined. The electronic device may for instance be suitable for outdoor and/or indoor navigation respectively positioning.

The outputting of the second fingerprint information of the method of the second exemplary aspect of the present invention may for instance be as follow:
The second fingerprint information may for instance be output, e.g. to one or more further apparatuses (e.g. a server or a base station (of a cellular communication system) or a radio node (of a non-cellular communication system (e.g. positioning system)) or a communication unit, in particular performing and/or controlling the method according to the first exemplary aspect of the present invention). Additionally or alternatively, the second fingerprint information may for instance be output to another apparatus that transfers (e.g. relays) the second fingerprint information to at least one of the aforementioned apparatuses.

The receiving of the live radio map of the method of the second exemplary aspect of the present invention may for instance be as follow:
The live radio map is indicative of a second radio environment covering a second (e.g. geographic) area comprising one or more communication units.

The first and/or second (e.g. geographic) area may for instance be of a limited size. The first and/or second area may for instance comprise one or more venues. Such a respective venue may for instance be a building, shopping mall, office complex, public accessible location (e.g. station, airport, university, library, or the like), to name but a few non-limiting examples. The first and/or second area may for instance be located, at least partially, inside such a venue. In this case, at least a part of the first and/or second area may for instance be a floor plan respectively map of the respective venue. In case the venue comprises more than one floor, the first and/or second geographic area may for instance comprise one or more of the floors of the venue. In case the first and/or second areas comprise, at least partially, an outside area, in which e.g. one or more venues may be located, the geographic area may for instance be represented by a map.

Such a live radio map may be understood to represent an area (e.g. the second area) of a pre-determined environment within which the one or more communication units are expected to support e.g. electronic device to get their positions estimated. Additionally or alternatively, the live radio map may be defined by an environment and/or an area (e.g. the second area) within which the one or more communication units are capable to support e.g. electronic devices to estimate their positions. Since the live radio map may for instance be generated or updated e.g. by the method according to the first exemplary aspect of the present invention, and the generation or updatingmay for instance be at least partially based on the second fingerprint information gathered based on one or more communication units of a first radio environment, the live radio map may for instance represent a second radio environment containing the additional information of a timestamp information associated with the respective information of the first radio environment. Further, the live radio map representing the second radio environment may for instance comprise at least a part the first radio environment.

The live radio map may for instance be received from the apparatus (es) (e.g. a server or a base station (of a cellular communication system) or a radio node (of a non-cellular communication system (e.g. positioning system)) to which the second fingerprint information was initially output prior to the receiving of the live radio map. Alternatively, the live radio map may for instance be received from another entity that is different from the apparatus(s) to which the second fingerprint information was initially output prior to the receiving of the live radio map, which transmits (e.g. relays) the live radio map to the at least one electronic device performing and/or controlling the method according to the second exemplary aspect of the present invention.

According to an exemplary embodiment of the second exemplary aspect of the present invention, the method further comprises:
- outputting a positioning request together with the second fingerprint information, wherein the positioning request is indicative of a request to get (e.g. receive, in return to the outputting (e.g. sending) of the positioning request) a determined location estimate indicative of a current position of the at least one electronic device to be determined; and
- receiving the location estimate; or
- determining a location estimate indicative of a current position of the at least one electronic device based at least partially on the fingerprint information and the received live radio map.

The positioning request may for instance be output together with the second fingerprint information. Thus, the positioning request may for instance be output e.g. to one or more further apparatuses (e.g. a server or a base station (of a cellular communication system) or a radio node (of a non-cellular communication system (e.g. positioning system)) or a communication unit, in particular performing and/or controlling the method according to the first exemplary aspect of the present invention). Additionally or alternatively, the second fingerprint information may for instance be output to another apparatus that transfers (e.g. relays) the second fingerprint information to at least one of the aforementioned apparatuses. The positioning request and the second fingerprint information may for instance be comprised by the same data packet. Alternatively, the positioning request and the second fingerprint information may for instance be output by subsequent data packets, to name but a few non-limiting example.

Upon the outputting (e.g. transmitting respectively sending) of the positioning request, in response, a location estimate may for instance be received. Thus, at least partially based on the positioning request and the second fingerprint information, the entity that has received the output positioning request and the second fingerprint information may for instance have determined the location estimate, and then output the result in the form of the location estimate to the at least one electronic device.

Alternatively to the outputting of the positioning request and the second fingerprint information, the at least one electronic device may for instance determine a corresponding location estimate by itself. Such a location estimate may for instance be indicative of an estimation of a current position at which the one or more signals that are formed into the fingerprint information are observable and/or receivable.

According to an exemplary embodiment of the second exemplary aspect of the present invention, a gathering of one or more pieces of respective (e.g. first) fingerprint information is performed multiple times at the same location, wherein the gathered one or more pieces of respective (e.g. first) fingerprint information are utilized to generate or update a respective live radio map.

The gathering of a respective (e.g. first) fingerprint information may for instance be performed by measuring a plurality of observable signals at a certain location, e.g. by an apparatus (e.g. an electronic device). That plurality of observable signals at a certain location may for instance be gathered (e.g. measured or recorded). It may for instance be gathered which signals are observable, how is the respective signal strength at the certain location, or the like, to name but a few non-limiting examples.

Such a gathering may for instance not be limited to a single one of such a gathering, but can be performed at least twice, or a multiple of times. For instance, such a gathering may for instance be performed at least twice, or a multiple of times at the same location, e.g. at different times, days, or a combination thereof, to name but a few non-limiting examples. In this way, one or more respective pieces of (e.g. first) fingerprint information gathered at those different times, days, or a combination thereof, may for instance be indicative of a state of observable (e.g. radio signals) during those different times, days, or a combination thereof. This may for instance enable to generate or update (see first exemplary aspect of the present invention) the live radio map to those different times, days, or a combination thereof.

The features and example embodiments of the invention described above may equally pertain to the different aspects according to the present invention.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE DRAWINGS

In the figures show:
- Fig. 1: a schematic block diagram of a system according to the third exemplary aspect of the present invention;
- Fig. 2a: a flowchart showing an example embodiment of a method according to the first exemplary aspect of the present invention;
- Fig. 2b-d: flowcharts showing example aspects of a method according to the first exemplary aspect of the present invention, which may for instance be performed in addition to the flowchart of Fig. 2a;
- Fig. 3a: a flowchart showing an example embodiment of a method according to the second exemplary aspect of the present invention;
- Fig. 3b-c: flowcharts showing example aspects of a method according to the second exemplary aspect of the present invention, which may for instance be performed in addition to the flowchart of Fig. 3a;
- Fig. 4: a schematic block diagram of an apparatus configured to perform the method according to the first exemplary aspect of the present invention; and
- Fig. 5: a schematic block diagram of an apparatus configured to perform the method according to the second exemplary aspect of the present invention.

### DETAILED DESCRIPTION OF SOME EXEMPLARY EMBODIMENTS

The following description serves to deepen the understanding of the present invention and shall be understood to complement and be read together with the description as provided in the above summary section of this specification.

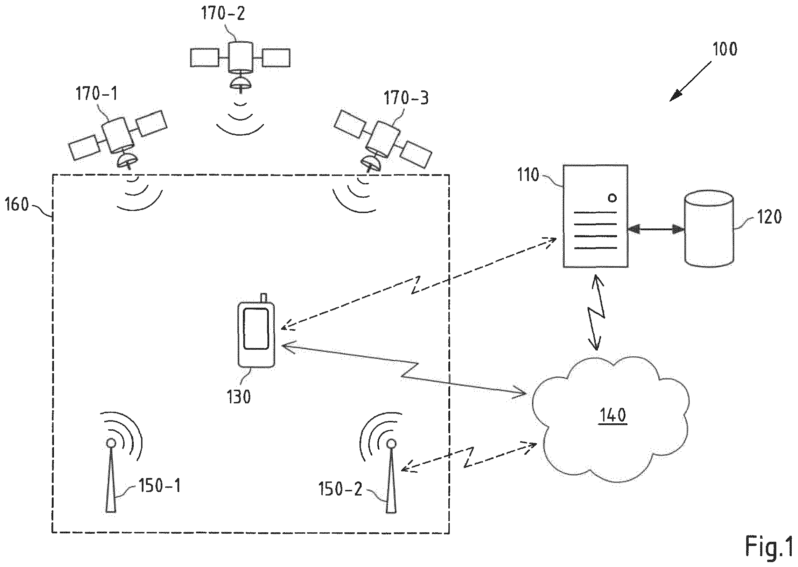

Fig. 1 is a schematic high-level block diagram of a system 100 according to an exemplary aspect of the present invention. Such a system 100 may for instance represent an architecture and/or environment that is configured, at least partially, to perform and/or control one or more exemplary aspects of the present invention.

System 100 comprises a server 110, an optional database 120, one or more electronic devices 130 (e.g. a smartphone, tablet, wearable, IoT-device; wherein in Fig. 1 only one single device is exemplary shown), and one or more communication units 150 (from which two WLAN and/or BT and/or BLE access points respective beacons 150-1 and 150-2 are shown) and one or more satellites 170 (from which three satellites 170-1, 170-2, 170-3 that are satellite-based (e.g. GNSS-based) are shown).

The optional database 120 may for instance be comprised by or connectable to server 110. In case optional database 120 is comprised by server 110, server 110 and database 120 may form a single entity. The database 120 may for instance comprise a memory, e.g. for storing one or more pieces of (first and/or second) fingerprint information, one or more pieces of timestamp information, one or more live radio maps, one or more pieces of trustworthiness information, one or more (first and/or second) location estimates, or a combination thereof, to name but a few non-limiting examples.

System 100 may for instance further comprise a communication network 140. The communication network 140 may for instance be used for transmitting information (e.g. one or more pieces of (first and/or second) fingerprint information, one or more live radio maps, one or more pieces of trustworthiness information, one or more (first and/or second) location estimates, or a combination thereof, to name but a few non-limiting examples) between the server 110, the one or more electronic devices 130, and/or the one or more communication units, e.g. configured as WLAN and/or BT and/or BLE access points access points respectively beacons 150. The communication network may for instance be the internet and/or a cellular communication network, to name but a few non-limiting examples. It will be understood that communication network 140 may for instance be used for transmitting information between entities, devices, and/or units that are not explicitly shown in Fig. 1 and/or described within the meaning of the present invention. Alternatively, communication network 140 may for instance be configured to transmit information for the entities, devices and/or units that are explicitly shown in Fig. 1 and/or described within the meaning of the present invention.

The server 110 may alternatively be embodied as a server cloud (e.g. a plurality of servers connected, e.g. via the internet, and/or the communication network 140, and providing one or more services at least partially jointly). The server 110, which may for instance be embodied as a positioning respectively navigation server, configured to provide e.g. one or more radio maps, and/or perform and/or control positioning requests to determine (e.g. estimate) one or more positions of one or more electronic devices (e.g. one or more electronic devices 130) to be determined (e.g. estimated, e.g. represented by one or more respective second location estimates). The server 110 may for instance be connected to the one or more electronic devices 130, and/or to the one or more communication units 150 via a wirebound and/or wireless communication connection (e.g. according to the WiFi, BT, BLE, and/or ZigBee communication standard, to name but a few non-limiting examples). For instance, such wirebound and/or wireless communication connections may be enabled by the communication network 140.

Electronic device(s) 130, and communication units 150 may for instance be located within an area 160, e.g. a geographic area. Communication units 150 may for instance provide cellular and/or wireless communication services within area 160. Further, satellites 170 may for instance cover area 160 so that one or more signals sent (e.g. via broadcast) may for instance be receivable and/or observable within area 160. Area 160 may for instance be a venue or comprise one or more venues.

Example embodiments according to all aspects of the present invention enable a method, e.g. for determining (e.g. calculating) a trust index (e.g. a trustworthiness information) comprised by a live radio map to be provided together with location information (e.g. based on a determined second location estimate), wherein the live radio map
- is collected and updated near real-time based on fingerprint information received from the crowd-sourcing electronic devices (e.g. electronic device 130 of Fig. 1) or as part of the location requests;
- contains information on signals that are typically discarded in positioning purposes, i.e. information on ad-hoc and wireless access points (e.g. communication units 150 of Fig. 1);
- has short time-to-live, because of the mobile/random/sporadic nature of the signals; and
   wherein trust index (e.g. trustworthiness information) for a location estimate is determined (e.g. calculated) by checking, if a positioning request e.g. for a given area contains at least some of the mobile/ad-hoc/sporadic (e.g. radio) signals seen by other (e.g. mobile) devices in the area, and if such mobile/ad-hoc/sporadic signal match is found, increasing the trust index (e.g. comprised or represented by the trustworthiness information), and e.g. comprise such information in the live radio map.

The live radio map structure may for instance be as follows:
The live radio map may be implemented as a geo-spatial key-value database that uses e.g. a hash calculated from coordinates (e.g. latitude-, longitude-coordinates) as a key. Such a database has a simple, flat structure and, thus, high performance.

Further, in such a database the Earth surface may for instance be divided into small areas, such as squares or rectangles, wherein each of such squares or rectangles represents a record. Each record may for instance hold timestamped information (e.g. represented by a timestamp information) on the ad-hoc/mobile/sporadic (e.g. radio) signals observed in that respective small area. The signals may belong to any radio interface including WiFi, BT, BLE, cellular, or a combination thereof, to name but a few non-limiting examples.

The maintenance of the live radio map may for instance be as follows:
The live radio map information may be updated via at least two mechanisms (1) and (2):
(1): as described above, the crowd-sourced positioning services may for instance be based on collecting location-tagged & time-tagged fingerprint information from a large (e.g. mobile) device base. It is known that ad-hoc/mobile (e.g. radio) signals are thrown away, but according to example embodiments of all aspects of the present invention, in the live radio map, those may be stored; and
(2): positioning service may for instance serve a large volume of positioning requests from (e.g. electronic) devices needing location information (e.g. represented by corresponding location estimates). These positioning requests may for instance also comprise or contain radio measurements. Further, e.g. after the positioning request has been performed, e.g. the location estimate has been determined, thus, the corresponding (e.g. electronic) device is located using fixed/static access point data, the ad-hoc/mobile radio data from the positioning request may be stored to the live radio map.

Due to the dynamic nature of the live radio map, the records have short time-to-live and, thus, may for instance be cleaned. This can be implemented e.g. so that whenever a record (=small area) is accessed, the old data stored to the record is first cleaned.

Example embodiments according to all aspects of the present invention may for instance be applied to the following scenario:
For high value locations, independent radio environment collectors may for instance be installed to report real-time radio environment changes at the given location.

The usage of a generated live radio map may for instance be as follows:
Upon the reception of a positioning request, a system according to example embodiments of the present invention shall locate (e.g. determining a location estimate) the mobile device using a conventional, static radio map. This produces coordinates (e.g. latitude-, longitude-coordinates) represented by or comprised by the then determined location estimate). Next, the live radio map may be accessed to see, if recent information on the ad-hoc/mobile (e.g. radio) signals in the area is found in the live radio map. If yes, the information in the positioning request is compared to the record in the live radio map. If there is enough similarity in the ad-hoc/mobile (e.g. radio) signal data, trust index (e.g. represented by a trustworthiness information) may be set to a high value.

In this way, spoofing prevention allows e.g. to avoid financial and reputation losses or legal penalties, adds additional layer of security. The random nature of the ad-hoc/wireless access points makes such information unpredictable and impossible to falsify by attackers.

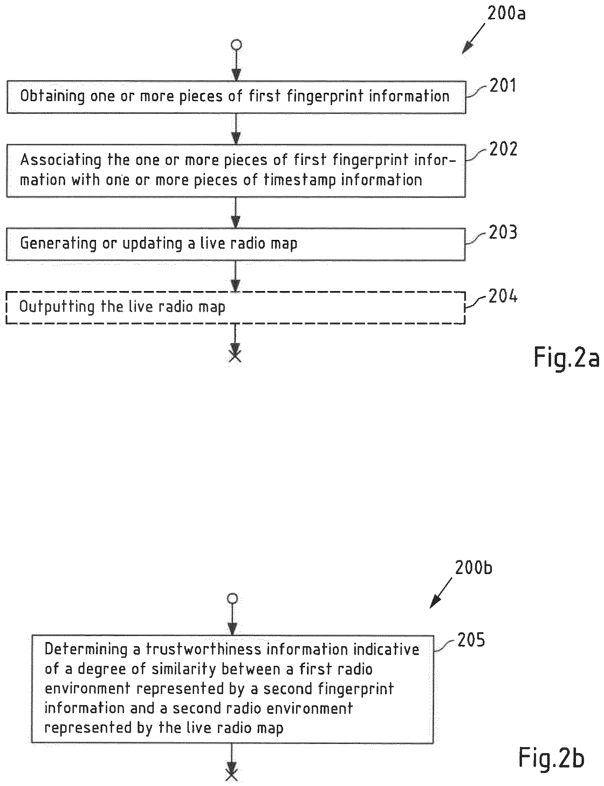

Fig. 2a is a flowchart 200a showing an example embodiment of a method according to the first exemplary aspect of the present invention. This flowchart 200a may for instance be performed by a server, and/or a communication unit, e.g. server 110, and/or one of the communication units 150-1, 150-2 of Fig. 1.

In a first step 201, one or more pieces of first fingerprint information are obtained. The one or more pieces of first fingerprint information may for instance be obtained by receiving the one or more pieces of first fingerprint information from one or more electronic devices (e.g. such electronic devices as electronic device 130 shown in Fig. 1).

In a second step 202, the one or more pieces of first fingerprint information are associated with one or more pieces of timestamp information. Upon reception of a respective first fingerprint information, the respective first fingerprint information may for instance be associated with a respective timestamp information, which may for instance be generated upon the obtaining of the respective first fingerprint information. For instance, such a timestamp information may for instance be generated by capturing the current time and/or day, to name but one non-limiting example. In this way, up-to-dateness of the respective fingerprint information can be monitored.

In a third step 203, a live radio map is generated or updated. The live radio map may for instance be generated in case e.g. database (e.g. database 120 of Fig. 1) does not comprise such a live radio map (or a part of it, a so-called partial live radio map). In case e.g. database (e.g. database 120 of Fig. 1) does comprise such a live radio map (or a part of it, a so-called partial live radio map), this live radio map (or a part of it) comprised by the database can be updated. Such an updating may for instance comprise a cleaning of outdated information, and/or incorporating (e.g. adding) new information that are not comprised in the stored live radio map (or a part of it) in the database. Further, a respective timestamp information may for instance be updated for an existing record of the live radio map, e.g. if corresponding one or more identifiers and/or signals of one or more communication units are detected in one or more pieces of "new" respectively "fresh" fingerprint information.

In an optional fourth step 204, the live radio map (or a part of it, e.g. a partial live radio map) is output. The live radio map (or a part of it) may for instance be output (e.g. transmitted) to the electronic device(s) (e.g. electronic device 130 of Fig. 1) from a respective fingerprint information is obtained (e.g. received) in step 201.

It will be understood that at least some of the steps 201 to 204 may for instance be performed and/or controlled by different entities. For instance, steps 201 and 202 may for instance be performed and/or controlled by at least one of the communication units 150-1, or 150-2. Then, step 203 may for instance be performed and/or controlled by server 110. Alternatively, all of the steps 201 to 203 and optionally 204 may for instance be performed and/or controlled by a respective communication unit (communication unit 150-1 or 150-2 of Fig. 1), or all of the steps 201 to 203 and optionally step 204 may for instance be performed and/or controlled by the server 110 of Fig. 1.

Fig. 2b is a flowchart 200b showing an example aspect of a method according to the first exemplary aspect of the present invention. This flowchart 200b may for instance be performed by a server, and/or a communication unit, e.g. server 110, and/or one of the communication units 150-1, 150-2 of Fig. 1.

Flowchart 200b comprises an additional step 205 that may for instance be performed in addition to the steps 201 to 204 of flowchart 200a. It will be understood that step 205 may for instance be performed subsequently to step 203 of flowchart 200a in order to ensure that live radio map is present, e.g. directly subsequent to the step 203 of flowchart 200a.

In step 205, a trustworthiness information is determined. The trustworthiness information may for instance be determined based at least partially on a comparison of a second fingerprint information, which may for instance be obtained, with the live radio map. The trustworthiness information may for instance be output e.g. to the electronic device(s) (e.g. electronic device 130 of Fig. 1) from which the respective second fingerprint information is obtained (e.g. received).

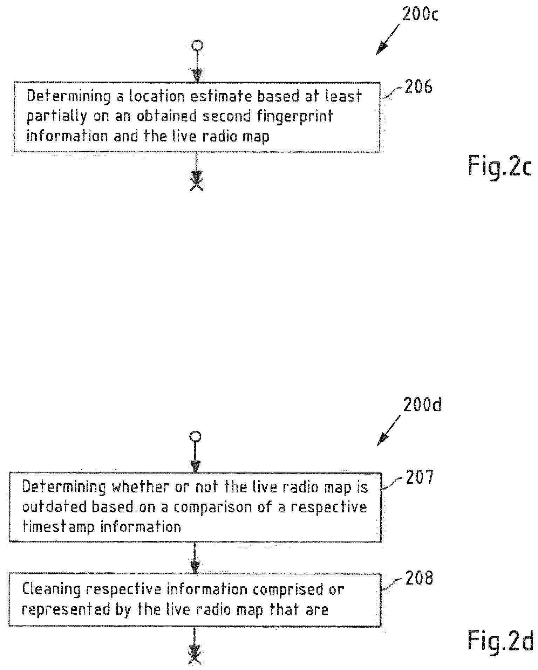

Fig. 2c is a flowchart 200c showing an example aspect of a method according to the first exemplary aspect of the present invention. This flowchart 200c may for instance be performed by a server, and/or a communication unit, e.g. server 110, and/or one of the communication units 150-1, 150-2 of Fig. 1.

Flowchart 200c comprises an additional step 206 that may for instance be performed in addition to the steps 201 to 204 of flowchart 200a, and/or in addition to step 205 of flowchart 200b. It will be understood that step 206 may for instance be performed subsequently to step 203 of flowchart 200a in order to ensure that live radio map is present, e.g. directly subsequent to the step 203 of flowchart 200a.

In step 206, one or more location estimates can be determined. A respective location estimate is determined based at least partially on a respective second fingerprint information (see step 205 of Fig. 2b) and the live radio map (see step 203 of Fig. 2a). The live radio map may for instance be output e.g. to the electronic device(s) (e.g. electronic device 130 of Fig. 1) from a respective fingerprint information is obtained (e.g. received) in step 201 of flowchart 200a of Fig. 2a.

Fig. 2d is a flowchart 200d showing an example aspect of a method according to the first exemplary aspect of the present invention. This flowchart 200d may for instance be performed by a server, and/or a communication unit, e.g. server 110, and/or one of the communication units 150-1, 150-2 of Fig. 1.

Flowchart 200d comprises additional steps 207 and 208 that may for instance be performed in addition to the steps 201 to 204 of flowchart 200a, and/or in addition to step 205 of flowchart 200b, and/or in addition to step 206 of flowchart 200c. It will be understood that steps 207 and 208 may for instance be performed subsequently to step 203 of flowchart 200a in order to ensure that live radio map is present, e.g. directly subsequent to the step 203 of flowchart 200a.

In step 207, it is determined, whether or not the live radio map is outdated. This is determined based at least partially on a respective timestamp information. Thus, it may for instance be determined how old one or more pieces of fingerprint information at least partially comprised by the live radio map are compared to "new" fingerprint information. Then, e.g. in case a pre-defined threshold is exceeded, the live radio map can be updated based at least partially on the "new" fingerprint information, to name but one non-limiting example.

In step 208, respective information comprised or represented by the live radio map that are outdated are cleaned out of the live radio map, so that e.g. "new" fingerprint information can be incorporated into the live radio map, to name but one non-limiting example.

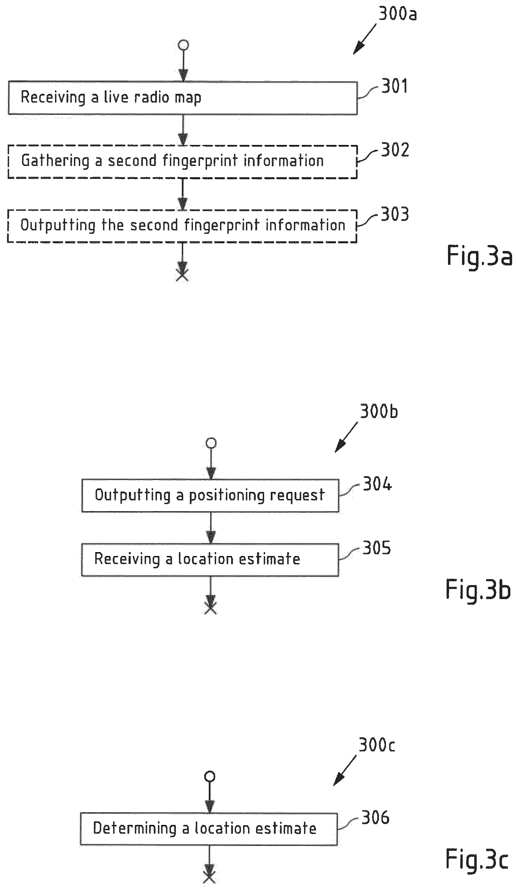

Fig. 3a is a flowchart 300a showing an example embodiment of a method according to the second exemplary aspect of the present invention. This flowchart 300a may for instance be performed by an electronic device, e.g. electronic device 130 of Fig. 1.

In a first step 301, a live radio map (or a part of it, e.g. a partial live radio map) is received. Such a live radio map may for instance be generated at least partially based on one or more pieces of first fingerprint information (see step 203 of Fig. 2a). Such a live radio map may for instance be generated according to flowchart 200a of Fig. 2a. The live radio map may for instance be received from one or more further apparatuses (e.g. a server (e.g. server 110 of Fig. 1 in case flowchart 300a is performed and/or controlled by an apparatus that is different from server 110 of Fig. 1) or a base station (not shown in Fig. 1) or a radio node (e.g. one of the one or more communication units, e.g. configured as WLAN and/or BT and/or BLE access points access points respectively beacons 150 of Fig. 1), in particular performing and/or controlling the flowchart 200a of Fig. 2a).

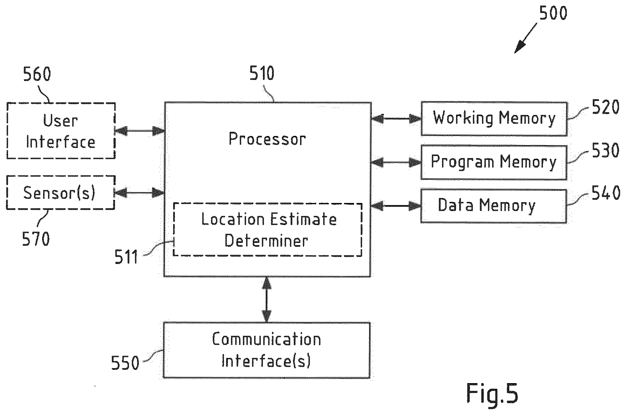

In a second step 302, a second fingerprint information is gathered. The second fingerprint information may for instance be gathered by one or more sensors (see e.g. sensor(s) 570 of apparatus 500 of Fig. 5). It will be understood that such one or more sensors may for instance be comprised by or be connectable to electronic device 130 of Fig. 1 (e.g. a smartphone, tablet, smart watch, wearable, to name but a few non-limiting examples).

In a third step 303, the second fingerprint information is output. The second fingerprint information may for instance be output e.g. to one or more further apparatuses (e.g. a server (e.g. server 110 of Fig. 1 in case flowchart 300a is performed and/or controlled by an apparatus that is different from server 110 of Fig. 1) or a base station (not shown in Fig. 1) or a radio node (e.g. one of the one or more communication units, e.g. configured as WLAN and/or BT and/or BLE access points access points respectively beacons 150 of Fig. 1), in particular performing and/or controlling the flowchart 200a of Fig. 2a).

Fig. 3b is a flowchart 300b showing an example aspect of a method according to the second exemplary aspect of the present invention. This flowchart 300b may for instance be performed by an electronic device, e.g. electronic device 130 of Fig. 1.

Flowchart 300b comprises additional steps 304 and 305 that may for instance be performed in addition to the steps 301 to 303 of flowchart 300a. It will be understood that steps 304 and 305 may for instance be performed subsequent to step 303 of flowchart 300a in order to ensure that a live radio map is present (e.g. stored in a memory) at the electronic device, e.g. directly subsequent to the step 303 of flowchart 300a.

In step 304, a positioning request is output. The positioning request may for instance be output e.g. to one or more further apparatuses (e.g. a server (e.g. server 110 of Fig. 1 in case flowchart 300a is performed and/or controlled by an apparatus that is different from server 110 of Fig. 1) or a base station (not shown in Fig. 1) or a radio node (e.g. one of the one or more communication units, e.g. configured as WLAN and/or BT and/or BLE access points access points respectively beacons 150 of Fig. 1), in particular performing and/or controlling the flowchart 200a of Fig. 2a).

In step 305, a (second) location estimate is received, e.g. as a response to the output positioning request of step 304. The location estimate may for instance be received from one or more further apparatuses (e.g. a server (e.g. server 110 of Fig. 1 in case flowchart 300a is performed and/or controlled by an apparatus that is different from server 110 of Fig. 1) or a base station (not shown in Fig. 1) or a radio node (e.g. one of the one or more communication units, e.g. configured as WLAN and/or BT and/or BLE access points access points respectively beacons 150 of Fig. 1), in particular performing and/or controlling the flowchart 200a of Fig. 2a).

Fig. 3c is a flowchart 300c showing an example aspect of a method according to the second exemplary aspect of the present invention. This flowchart 300c may for instance be performed by an electronic device, e.g. electronic device 130 of Fig. 1.

Flowchart 300c comprises an additional step 306 that may for instance be performed in addition to the steps 301 to 303 of flowchart 300a, and/or in addition to the steps 304 and 305 of flowchart 300b of Fig. 3b. It will be understood that step 306 may for instance be performed subsequent to step 303 of flowchart 300a in order to ensure that a live radio map is present (e.g. stored in a memory) at the electronic device, e.g. directly subsequent to the step 303 of flowchart 300a.

In step 306, a location estimate is determined by the electronic device performing flowchart 300a of Fig. 3a by itself.

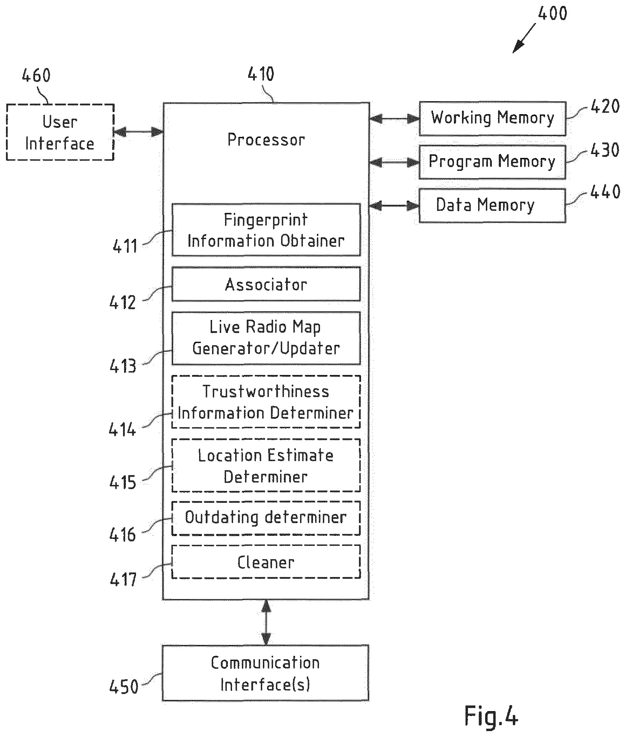

Fig. 4 is a schematic block diagram of an apparatus 400 according to the first exemplary aspect of the present invention, which may for instance represent server 110 of Fig. 1. Alternatively, the schematic block diagram of the apparatus 400 according to the first exemplary aspect of the present invention may for instance represent one of the communication units 150-1, 150-2 of Fig. 1.

Apparatus 400 comprises a processor 410, working memory 420, program memory 430, data memory 440, communication interface(s) 450, and an optional user interface 460.

Apparatus 400 may for instance be configured to perform and/or control or comprise respective means (at least one of 410 to 460) for performing and/or controlling the method according to the first exemplary aspect of the present invention. Apparatus 400 may as well constitute an apparatus comprising at least one processor (410) and at least one memory (420) including computer program code, the at least one memory and the computer program code configured to, with the at least one processor, cause an apparatus, e.g. apparatus 400 at least to perform and/or control the method according to the first exemplary aspect of the present invention.

Processor 410 may for instance comprise a fingerprint information obtainer 411 as a functional and/or structural unit. Fingerprint information obtainer 411 may for instance be configured to obtain one or more pieces of fingerprint information (see step 201 of Fig. 2a).

Processor 410 may for instance comprise an associator 412 as a functional and/or structural unit. Associator 412 may for instance be configured to associate one or more pieces of fingerprint information (e.g. those of step 201 of Fig. 2a) with one or more pieces of timestamp information (see step 202 of Fig. 2a).

Processor 410 may for instance comprise a live radio map generator/updater 413 as a functional and/or structural unit. Live radio map generator/updater 413 may for instance be configured to generate a live radio map, or to update a live radio map, e.g. stored in data memory 440 (see step 203 of Fig. 2a).

Processor 410 may for instance comprise an optional trustworthiness information determiner 414 as a functional and/or structural unit. Trustworthiness information determiner 414 may for instance be configured to determine a trustworthiness information (see step 205 of Fig. 2b).

Processor 410 may for instance comprise an optional location estimate determiner 415 as a functional and/or structural unit. Location estimate determiner 415 may for instance be configured to determine a location estimate (see step 206 of Fig. 2c).

Processor 410 may for instance comprise an optional outdating determiner 416 as a functional and/or structural unit. Outdating determiner 416 may for instance be configured to determine whether or not a live radio map (e.g. stored in data memory 440) is outdated (see step 207 of Fig. 2d).

Processor 410 may for instance comprise an optional cleaner 417 as a functional and/or structural unit. Cleaner 417 may for instance be configured to clean respective information comprised or represented by a live radio map (e.g. stored in data memory 330) that are outdated whether or not a live radio map (e.g. stored in data memory 440) is outdated (see step 208 of Fig. 2d).

Processor 410 may for instance further control the memories 420 to 440, the communication interface(s) 450, and the optional user interface 460.

Processor 410 may for instance execute computer program code stored in program memory 430, which may for instance represent a computer readable storage medium comprising program code that, when executed by processor 410, causes the processor 410 to perform the method according to the first exemplary aspect of the present invention.

Processor 410 (and also any other processor mentioned in this specification) may be a processor of any suitable type. Processor 410 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 410 may for instance be an application processor that runs an operating system.

Program memory 430 may also be included into processor 410. This memory may for instance be fixedly connected to processor 410, or be at least partially removable from processor 410, for instance in the form of a memory card or stick. Program memory 430 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 430 may also comprise an operating system for processor 410. Program memory 430 may also comprise a firmware for apparatus 400.

Apparatus 400 comprises a working memory 420, for instance in the form of a volatile memory. It may for instance be a Random Access Memory (RAM) or Dynamic RAM (DRAM), to give but a few non-limiting examples. It may for instance be used by processor 410 when executing an operating system and/or computer program.

Data memory 440 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 440 may for instance store one or more pieces of (first and/or second) fingerprint information, one or more pieces of timestamp information, one or more live radio maps, one or more pieces of trustworthiness information, one or more (first and/or second) location estimates, or a combination thereof, to name but a few non-limiting examples.

Communication interface(s) 450 enable apparatus 400 to communicate with other entities, e.g. with electronic device(s) 130. Further, in case apparatus 400 represents server 110 of Fig. 1, communication interface(s) 450 enable apparatus 400 to communicate with communication unit(s) 150-1, 150-2 of Fig. 1. In case apparatus 400 represents one of the communication units 150-1, 150-2 of Fig. 1, communication interface(s) 450 enable apparatus 400 to communicate with server 110 of Fig. 1. The communication interface(s) 450 may for instance comprise a wireless interface, e.g. a cellular radio communication interface and/or a WLAN interface and/or a BT interface and/or a BLE interface) and/or wire-bound interface, e.g. an IP-based interface, for instance to communicate with entities via the Internet.

User interface 460 is optional and may comprise a display for displaying information to a user and/or an input device (e.g. a keyboard, keypad, touchpad, mouse, etc.) for receiving information from a user.

Some or all of the units of the apparatus 400 may for instance be connected via a bus. Some or all of the units of the apparatus 400 may for instance be combined into one or more modules.

Fig. 5 is a schematic block diagram of an apparatus 500 according to the second exemplary aspect of the present invention, which may for instance represent the electronic device(s) 130 of Fig. 1.

Apparatus 500 comprises a processor 510, working memory 520, program memory 530, data memory 540, communication interface(s) 550, an optional user interface 560 and (an) optional sensor(s) 570.

Apparatus 500 may for instance be configured to perform and/or control or comprise respective means (at least one of 510 to 570) for performing and/or controlling the method according to the second exemplary aspect of the present invention. Apparatus 500 may as well constitute an apparatus comprising at least one processor (510) and at least one memory (520) including computer program code, the at least one memory and the computer program code configured to, with the at least one processor, cause an apparatus, e.g. apparatus 500 at least to perform and/or control the method according to the second exemplary aspect of the present invention.

Processor 510 may for instance comprise an optional location estimate determiner 511 as a functional and/or structural unit. Location estimate determiner 511 may for instance be configured to determine a location estimate (see step 306 of Fig. 3c).

Processor 510 may for instance further control the memories 520 to 540, the communication interface(s) 550, the optional user interface 560 and the optional sensor(s) 570.

Processor 510 may for instance execute computer program code stored in program memory 530, which may for instance represent a computer readable storage medium comprising program code that, when executed by processor 510, causes the processor 510 to perform the method according to the second exemplary aspect of the present invention.

Processor 510 (and also any other processor mentioned in this specification) may be a processor of any suitable type. Processor 510 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 510 may for instance be an application processor that runs an operating system.

Program memory 530 may also be included into processor 510. This memory may for instance be fixedly connected to processor 510, or be at least partially removable from processor 510, for instance in the form of a memory card or stick. Program memory 530 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 530 may also comprise an operating system for processor 510. Program memory 530 may also comprise a firmware for apparatus 500.

Apparatus 500 comprises a working memory 520, for instance in the form of a volatile memory. It may for instance be a Random Access Memory (RAM) or Dynamic RAM (DRAM), to give but a few non-limiting examples. It may for instance be used by processor 510 when executing an operating system and/or computer program.

Data memory 540 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 540 may for instance store one or more pieces of radio environment information, one or more pieces of (first and/or second) fingerprint information, one or more live radio maps, one or more pieces of (first and/or second) location estimates, one or more positioning requests, or a combination thereof, to name but a few non-limiting examples.

Communication interface(s) 550 enable apparatus 500 to communicate with other entities, e.g. with server 110, and/or with communication unit(s) 150-1, 150-2 of Fig. 1. The communication interface(s) 550 may for instance comprise a wireless interface, e.g. a cellular radio communication interface and/or a WLAN interface and/or a BT interface and/or a BLE interface) and/or wire-bound interface, e.g. an IP-based interface, for instance to communicate with entities via the Internet.

User interface 560 is optional and may comprise a display for displaying information to a user and/or an input device (e.g. a keyboard, keypad, touchpad, mouse, etc.) for receiving information from a user.

Sensor(s) 570 are optional and may for instance comprise a barometric sensor, e.g. to gather pressure information indicative of a (relative) altitude value, and/or an image sensor, and/or a magnetic field sensor, to name but a few non-limiting examples. Such pressure information may for instance be utilized in case of indoor positioning and/or navigation purposes, e.g. floor detection in a venue. The image sensor and/or the magnetic field sensor may for instance enable to gather image respectively magnetic information, wherein such image respectively magnetic information may for instance be utilized to determine an image based positioning information respectively a magnetic field based positioning information indicative of a location at which the respective piece(s) of information was (were) gathered.

Some or all of the units of the apparatus 500 may for instance be connected via a bus. Some or all of the units of the apparatus 500 may for instance be combined into one or more modules.

In the present specification, any presented connection in the described embodiments is to be understood in a way that the involved units are operationally coupled. Thus, the connections can be direct or indirect with any number or combination of intervening elements, and there may be merely a functional relationship between the units.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are only exemplary, and that any feature presented for a particular example embodiment may be used with any aspect of the invention on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature of the invention and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of only one of the enumerated features is possible. The specific combination of all subsequently enumerated features may as well be considered. Also, a plurality of only one of the enumerated features may be possible.

The sequence of all method steps presented above is not mandatory, also alternative sequences maybe possible. Nevertheless, the specific sequence of method steps exemplarily shown in the figures shall be considered as one possible sequence of method steps for the respective embodiment described by the respective figure.

The invention has been described above by means of example embodiments. It should be noted that there are alternative ways and variations which are obvious to a skilled person in the art and can be implemented without deviating from the scope of the appended claims.

## Claims

1. A first method, comprising:
- obtaining one or more pieces of first fingerprint information, wherein a respective piece of first fingerprint information is indicative of at least one first location estimate within a first radio environment covering a first area, wherein one or more signals of one or more communication units are observable at the estimated location;
- associating the one or more pieces of first fingerprint information with one or more pieces of timestamp information, wherein a respective timestamp information of the one or more pieces of timestamp information is indicative of a time and/or date at which a respective piece of first fingerprint information of the one or more pieces of first fingerprint information was obtained; and
- generating or updating a live radio map indicative of a second radio environment covering a second area at least partially covering the first area comprising one or more communication units, wherein the live radio map is generated or updated based at least partially on the one or more pieces of first fingerprint information and the respective one or more pieces of timestamp information.

2. The method of claim 1, further comprising:
- receiving a positioning request to get a second location estimate indicative of a current position of an electronic device from which the positioning request stems determined; and
- determining the second location estimate at least partially based on the live radio map.

3. The method of claim 2, further comprising:
- obtaining a second fingerprint information gathered by an electronic device,
wherein the second fingerprint information is indicative of one or more communication units comprised by a radio environment covering an area,
wherein one or more signals of the one or more communication units are observable at the location at which the second fingerprint information was gathered,
wherein the second location estimate is determined further based on the second fingerprint information.

4. The method of claim 3, further comprising:
- determining a trustworthiness information indicative of a degree of similarity between the radio environment represented by the second fingerprint information and the second radio environment represented by the live radio map, wherein the trustworthiness information is determined based at least partially on a comparison of the second fingerprint information with the live radio map.

5. The method of any of the preceding claims, wherein the one or more communication units are represented by one or more ad-hoc and/or wireless access points and/or Bluetooth beacons and/or Bluetooth Low Energy beacons.

6. The method of any of the preceding claims, wherein the one or more pieces of first and/or second fingerprint information are further indicative of one or more of the following communication networks i) to ii):
i) at least one cellular communication network; and
ii) at least one non-cellular communication network.

7. The method of any of the preceding claims, wherein the one or more pieces of first fingerprint information representing the first radio environment cover at least a part of the same area that is represented by or comprised by the live radio map.

8. The method of any of the preceding claims, further comprising:
- determining whether or not the live radio map is outdated based on a comparison of a respective timestamp information with a pre-determined or determined according to pre-defined rules time-to-live-information indicative of a timespan assuming no significant changes have occurred to a respective radio environment as comprised or represented by the live radio map; and
- cleaning respective information comprised or represented by the live radio map that are outdated in case the live radio map is outdated.

9. A second method, comprising:
- receiving a live radio map indicative of a second radio environment covering a second area at least partially covering the first area comprising one or more communication units.

10. The method of claim 9, further comprising:
- gathering a second fingerprint information indicative of one or more communication units comprised by a radio environment covering an area, wherein one or more signals of the one or more communication units are observable at a location; and
- outputting the second fingerprint information.

11. The method of claim 10, further comprising:
- outputting a positioning request together with the second fingerprint information, wherein the positioning request is indicative of a request to get a location estimate indicative of a current position of the at least one electronic device to be determined; and
- receiving the location estimate; or
- determining the location estimate indicative of a current position of the at least one electronic device based at least partially on the second fingerprint information and the received live radio map.

12. The method of any of the claims 1 to 11, wherein the second area represented by the live radio map is divided into one or more smaller areas, wherein each of those one or more smaller areas represent a respective partial live radio map covering a smaller area than the live radio map.

13. An apparatus configured to perform and/or control or comprising respective means for performing and/or controlling the method of any of the claims 1 to 8.

14. An electronic device configured to perform and/or control or comprising respective means for performing and/or controlling the method of any of the claims 9 to 12.

15. A system, comprising:
- at least one apparatus according to claim 13, and
- at least one electronic device according to claim 14.
